# EUROPÄISCHE PATENTSCHRIFT

(11) **EP 1 032 514 B1**
(45) Veröffentlichungstag und Bekanntmachung des Hinweises auf die Patenterteilung: **13.03.2002**
(21) Anmeldenummer: 98966172.3
(22) Anmeldetag: 27.11.1998
(51) Int. Cl.: B60R 21/32

(54) **KRAFTFAHRZEUG-INSASSENSCHUTZSYSTEM MIT MEHREREN ZÜNDPILLEN, UND VERFAHREN ZUM ANSTEUERN EINES ZÜNDKREISES EINES SOLCHEN INSASSENSCHUTZSYSTEMS**
MOTOR VEHICLE PASSENGER PROTECTION SYSTEM WITH SEVERAL SQUIBS, AND PROCESS FOR DRIVING THE IGNITION CIRCUIT OF SUCH A PASSENGER PROTECTION SYSTEM
SYSTEME DE PROTECTION DES PASSAGERS D'UN VEHICULE COMPORTANT PLUSIEURS AMORCES ET PROCEDE POUR LA COMMANDE DU CIRCUIT D'ALLUMAGE D'UN TEL SYSTEME DE PROTECTION DES PASSAGERS

(30) Priorität: 27.11.1997 DE 19752622
(43) Veröffentlichungstag der Anmeldung: 06.09.2000
(73) Patentinhaber: SIEMENS AKTIENGESELLSCHAFT, 80333 München (DE)
(72) Erfinder: BAUMGARTNER, Walter, D-93197 Zeitlarn (DE)
(86) Internationale Anmeldenummer: DE9803497
(87) Internationale Veröffentlichungsnummer: WO9928168

(56) Entgegenhaltungen:
- EP-A- 0 399 498
- EP-A- 0 615 886
- WO-A-99/05005
- DE-C- 19 624 357
- DE-C- 19 731 717
- DE-U- 29 609 556

## Beschreibung

Die Erfindung betrifft ein Insassenschutzsystem für ein Kraftfahrzeug. Weiterhin ist die Erfindung auf ein Verfahren zum Ansteuern eines Zündkreises eines solchen Insassenschutzsystems gerichtet.

Kraftfahrzeug-Insassenschutzsysteme wie etwa Airbagsysteme oder Gurtstraffersysteme enthalten häufig eine Mehrzahl von Zündpillen zur Auslösung der jeweils zugeordneten Schutzkomponente (zum Beispiel Airbag). Die Zündpillen sind herkömmlicherweise jeweils mit eigenen, zugeordneten Zündkreisen verbunden, die durch ein oder mehrere Steuergeräte bei einem Unfall selektiv aktivierbar sind. Die Anzahl der Zündkreise erhöht sich zunehmend, insbesondere wenn zwei- oder mehrstufig zündbare Schutzkomponenten, zum Beispiel Airbags für Fahrer und Beifahrer, Seitenairbags, Kopfairbags, Knie- und Fußairbags usw. vorgesehen sind. Die relativ hohe Anzahl von Zündkreisen ergibt jedoch hohen Verkabelungsaufwand und eine entsprechende Anzahl von Leistungstransistoren zur Ansteuerung der jeweiligen Zündpillen.

In der nicht vorveröffentlichten DE 197 31 717 C1 ist eine Schaltung zum Zünden von zwei Zündpillen beschrieben, die über gemeinsame Leitungen mit einem gemeinsamen Steuergerät verbunden sind und weiterhin mit gegensinnig geschalteten, gleichrichtenden Elementen in Reihe geschaltet sind. Damit kann das Steuergerät durch Auswahl der Polarität des Zündsignals selektiv eine der beiden Zündpillen zünden.

Das DE 296 09 556 U1 zeigt und beschreibt als der Erfindung nächstkommender Stand der Technik eine Auslösevorrichtung für mindestens ein Rückhaltemittel in einem Kraftfahrzeug mit mehreren Zündelementen, die zusammen mit steuerbaren Schaltstufen in einer Serien-Parallelschaltung verschaltet an über eine vor- und eine nachgeschaltete Aktivierungsstufe an einer Energieversorgung liegen. Die steuerbaren Schalt- und Aktivierungsstufen sind hierbei als Feldeffekttransistoren (FET) gezeichnet. Je eine steuerbare Schaltstufe und je ein Zündelement sind hierbei parallel geschaltet und die so aufgebauten Parallelschaltungen liegen in Reihe zueinander. Nicht zu zündende Zündelemente können somit durch die jeweils parallelgeschaltete Schaltstufe (im Rahmen des endlichen Durchlaßwiderstandes eines FETs) "kurzgeschlossen" werden, sodaß ihre Zündenergie gegen unendlich geht.

Der Erfindung liegt die Aufgabe zugrunde, ein Insassenschutzsystem für ein Kraftfahrzeug derart auszugestalten, daß eine Mehrzahl von Zündpillen mit verringertem Verdrahtungsaufwand selektiv zündbar ist.

Diese Aufgabe wird mit den in Patentanspruch 1 genannten Merkmalen gelöst.

Vorteilhafte Ausgestaltungen der Erfindung sind in den Unteransprüchen angegeben.

Mit der Erfindung wird weiterhin ein Verfahren zum Ansteuern eines Zündkreises eines Insassenschutzsystems gemäß dem Patentanspruch 11 geschaffen.

Bei der Erfindung sind somit mindestens zwei Zündpillen vorhanden, die zur Zündung unterschiedlichen Zündenergiebedarf haben. Wenn das Steuergerät bei einem Gefahrenzustand eine Auslösung des Insassenschutzsystems als notwendig einstuft und einen Zündimpuls an die Zündpillen anlegt, kann aufgrund des unterschiedlichen Zündenergiebedarfs erreicht werden, daß eine zweistufige Zündung stattfindet, bei der die Zündpille mit geringerem Zündenergiebedarf früher zündet als diejenige(n) Zündpillen(n) mit höherem Zündenergiebedarf. Hierdurch läßt sich eine zwei- oder auch mehrstufige Auslösung des Schutzsystems, zum Beispiel von Airbags, erreichen, wobei das Steuergerät zur Erzeugung lediglich eines einzigen, zum Beispiel ausreichend starken oder langen Zündimpulses ausgelegt sein muß. Da dieser Zündimpuls über die gemeinsamen Leitungen zu der Mehrzahl von Zündpillen geführt wird, ist die Anzahl von Zündkreisen entsprechend reduziert und auch der Verdrahtungs- und Steuerungsaufwand stark verringert.

Die Zündpillen können hierbei bereits herstellungsgemäß auf unterschiedlich hohen Zündenergiebedarf ausgelegt sein. Es ist aber auch möglich, eine oder mehrere Zündpillen selektiv so zu beschalten, daß der durch diese Zündpille(n) fließende Zündstrom anfänglich abgeleitet oder abgeschwächt wird und somit die notwendige Zündenergie dieser Zündpille(n) - trotz identischen Aufbaus aller Zündpillen - erst später als bei einer anderen, von Beginn an mit dem vollen Zündstrom durchflossenen Zündpille erreicht wird.

Das Steuergerät ist so ausgelegt, daß es Zündimpulse mit unterschiedlichem Impulsenergieinhalt erzeugen kann. Hierzu wird vorzugsweise die Spannung und/oder der Strom und/oder die Zeitdauer der Zündimpulse variiert. Hierdurch wird es möglich, daß das Steuergerät den Zündimpuls in Abhängigkeit von der Schwere der über Sensoren gemeldeten Gefahrensituation (zum Beispiel Crash) angepaßt festlegen kann, zum Beispiel derart, daß bei einem schweren Aufprall alle relevanten Zündpillen durch eine sehr starken Zündimpuls im wesentlichen gleichzeitig gezündet werden. Bei einem schwächeren Aufprall kann demgegenüber ein schwächerer Zündimpuls erzeugt werden, der lediglich zur Zündung einer oder einiger weniger Zündpillen ausreicht. Damit ist eine situationsangepaßte Reaktion auf ein Unfallgeschehen möglich.

Das erfindungsgemäße System zeichnet sich dabei nicht nur durch verringerten Verdrahtungsaufwand aus, sondern ermöglicht auch eine einfache Erweiterung um weitere Zündpillen, die beispielsweise lediglich parallel an bereits vorhandene Zündpillen angeschlossen werden und hinsichtlich ihres Zündenergiebedarfs an die durch sie auszuübende Schutzfunktion angepaßt sind. Es ist hierbei weder ein zusätzliches Steuergerät noch der ein separater Zündkreis erforderlich.

Insbesondere eine parallele Anordnung der einzelnen Zündpillen erlaubt eine vereinfachte Erweiterung des Systems und eine vereinfachte Steuerung, da die durch die einzelnen Zündpillen fließenden Zündströme auch nach Zünden der schneller zündenden Zündpillen noch fließen kann. Zur Erhöhung der Sicherheit gegenüber unerwünschten Beeinflussungen durch bereits gezündete und zum Beispiel aufgrund eines Kurzschlusses den Zündstrom ableitenden Zündpillen können vorzugsweise mindestens diese schneller zündenden Zündpillen mit jeweils einer Sicherung versehen sein, die im Kurzschlußfall anspricht und den Stromfluß durch diese kurzgeschlossene Zündpille unterbricht. Damit steht der Zündstrom planmäßig zur Erregung der noch nicht gezündeten Zündpillen bereit.

Zur Erzielung zeitlich unterschiedlichen Zündverhaltens können eine oder einige Zündpillen mit einer Schaltung zur Beeinflussung des Stromführungsverhaltens versehen sein, beispielsweise mit einem kapazitiven Umgehungspfad, der anfänglich den Zündstrom aufnimmt und erst allmählich mit zunehmender Kapazitätsaufladung den Zündstrom durch die parallel liegende Zündpille fließen läßt. Eine solche Ausgestaltung ermöglicht es auch bei ansonsten identischen Zündpillen, unterschiedliches Ansprechverhalten der Zündpillen zu erreichen, so daß diese durch unterschiedliche Zündimpulse selektiv und/oder zeitversetzt gezündet werden können.

Es ist auch eine Reihenschaltung von Zündpillen möglich, wobei in diesem Fall als schneller ansprechende Zündpille eine Zündeinheit benutzt wird, die nach ihrer Zündung kurzgeschlossen ist.

Es ist auch möglich, Mischformen aus Parallel- und Serienschaltung der Zündpillen vorzusehen, bei denen einige Zündpillen in Reihe und andere Zündpillen parallel geschaltet sind oder einige der Parallelzweige seriell geschaltete Zündpillen enthalten. Hierdurch läßt sich die Vielzahl von Zündungsmöglichkeiten bei Einsatz entsprechender Zündimpulse noch weiter erhöhen.

Ferner können auch einige oder alle Zündpillen mit jeweils gegensinnig zueinander orientierten Gleichrichterelementen in Reihe geschaltet sein. Das Steuergerät erzeugt in diesem Fall vorzugsweise Zündimpulse nicht nur unterschiedlichen Energieinhalts, sondern auch unterschiedlicher Zündpolarität, so daß die Anzahl der zusammenfaßbaren Zündkreise, das heißt der über ein Steuergerät und gemeinsame Leitungen aktivierbaren Zündpillen, noch weiter erhöht werden kann.

Die Erfindung ist bei beliebigen, durch eine Mehrzahl von Zündpillen aktivierbaren Insassenschutzsystemen wie etwa Airbag-Rückhaltesystemen, Gurtstrammersystemen und dergleichen einsetzbar und erlaubt eine mehrstufige und/oder selektive Zündung von Kopf- und Thorax-Airbags für Fahrer und/oder Beifahrer, Seitenairbags, Knie- und Fußairbags usw.. Die hierbei anfallende Vielzahl von Zündpillen läßt sich zu einem oder einigen wenigen, durch ein oder einige wenige Steuergeräte steuerbaren Zündkreisen zusammenfassen, so daß der schaltungstechnische Aufwand erheblich verringert ist, ohne daß ein Verlust an Sicherheit oder Steuerungsmöglichkeit auftritt.

Die Erfindung wird nachstehend anhand von Ausführungsbeispielen unter Bezugnahme auf die Zeichnungen näher beschrieben.
- Fig. 1: zeigt ein Ausführungsbeispiel mit mehreren parallel geschalteten Zündpillen,
- Fig. 2: zeigt eine abgeänderte Ausführungsform eines Zündkreises,
- Fig. 3: zeigt ein Ausführungsbeispiel mit zusätzlichen Gleichrichterelementen, und
- Fig. 4: zeigt ein Ausführungsbeispiel mit seriell geschalteten Zündpillen.

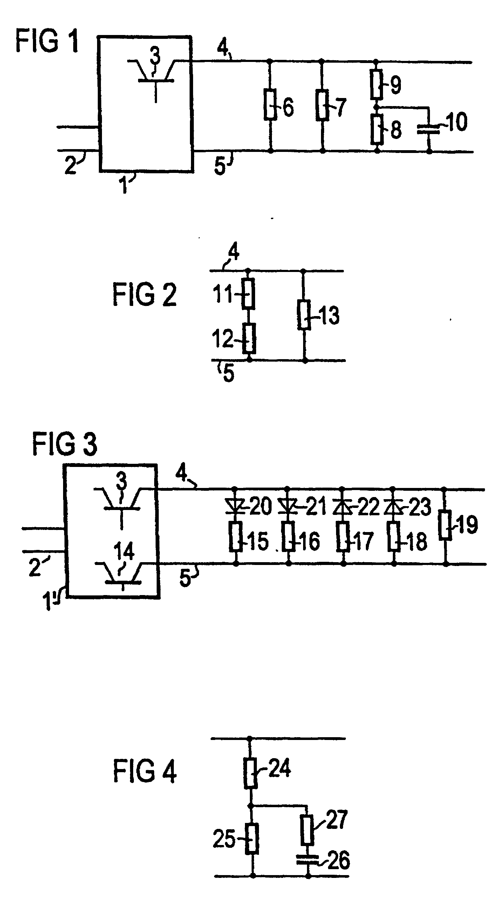

Bei dem in Fig. 1 gezeigten Ausführungsbeispielen ist ein Steuergerät 1 vorhanden, dem über eine oder mehrere Leitungen 2 Signale von am Kraftfahrzeug angebrachten Unfallsensoren (Crash-Sensoren) zugeführt werden. Das Steuergerät 1 bildet einen Bestandteil des beim vorliegenden Ausführungsbeispiel als Airbagsystem ausgebildeten Insassenschutzsystems und enthält einen schematisch dargestellten Schalter (Schalttransistor) 3 zur Ausgabe eines Zündimpulses über eine Leitung-4 bei Erfassung eines Unfalls. Der Zündstrom des Zündimpulses fließt über eine Leitung 5 zum Steuergerät zurück. Die Leitung 5 kann aber auch mit Massepotential verbunden sein, so daß der Zündstrom direkt gegen Masse fließt.

Der Schalttransistor 3 wird durch interne Steuerkomponenten des Steuergeräts über seinen Basisanschluß so gesteuert, daß die Zeitdauer eines jeweiligen Zündimpulses veränderbar ist. Alternativ oder zusätzlich kann auch die Spannungsamplitude des über den Schalttransistor 3 geführten und an die Leitung 4 abgegebenen Zündimpulses durch das Steuergerät 1 gezielt veränderbar eingestellt werden. Ferner ist der Schalttransistor 3 alternativ oder vorzugsweise zusätzlich mit einem Strombegrenzer verbunden (oder mit einer Strombegrenzungsfunktion ausgestattet), der durch das Steuergerät 1 auf unterschiedliche Stromstärken einstellbar ist. Damit kann das Steuergerät 1 Zündimpulse unterschiedlichen Energieinhalts erzeugen, bei denen die Zündspannung und/oder der Strompegel und/oder die Zeitdauer der Zündimpulse und damit die Aktivierung des an das Steuergerät 1 angeschlossenen Zünkreises (Leitungen 4 und 5 mit den im weiteren Text erläuterten Komponenten) gezielt variiert werden kann.

Bei dem in Fig. 1 gezeigten Ausführungsbeispiel sind mehrere Zündpillen 6, 7 und 8 zur zeitversetzten oder gleichzeitigen Zündung mehrerer separater Airbags oder eines mehrstufigen Airbags oder einer Kombination aus mehrstufig zündbaren Airbags und einstufigen Airbags parallel zueinander zwischen die Leitungen 4 und 5 geschaltet. Die Zündpillen 6, 7 und 8 bilden somit zusammen mit den Leitungen 4 und 5 einen gemeinsamen Zündkreis. Es können auch noch weitere, nicht dargestellte Zündpillen an diesen Zündkreis angeschlossen werden. Die Zündpillen 6 und 7 sind auf unterschiedlichen Zündenergiebedarf eingestellt, wobei der Zündenergiebedarf der Zündpille 6 niedriger ist als derjenige der Zündpille 7. Bei Anlegen eines Zündimpulses zwischen den Leitungen 4 und 5 zündet somit die Zündpille 6 regelmäßig vor der Zündpille 7. Bei Anlegen eines sehr starken Zündimpulses, der den Zündenergiebedarf der Zündspule 7 sofort deckt, können die Zündpillen 6 und 7 auch gleichzeitig zünden.

Das Steuergerät 1 ist derart ausgestaltet, daß es zur Zündung Zündimpulse unterschiedlichen Energieinhalts (Spannung x Strom x Dauer) in Abhängigkeit von der Schwere des Unfallgeschehens erzeugen kann. Wenn die Zündpillen 6 und 7 beispielsweise die Zündpillen eines zweistufig zündenden Airbags darstellen und bei einem Unfall die Zündung der ersten Stufe durch das Steuergerät 1 befohlen wird, erzeugt dieses einen Zündimpuls mit einer Zündspannung von beispielsweise 20 V und einer Strombegrenzung von 3 A. Eine Stromflußdauer von beispielsweise 2 ms reicht aus, um die Zündpille 6 der ersten Stufe zu aktivieren, wobei die zweite Zündpille 7 hierbei aber noch nicht ausgelöst wird. Wird vom Steuergerät 1 jedoch erkannt, daß die Unfallschwere auch noch eine Zündung der zweiten Zündpille 7 erforderlich macht, ändert das Steuergerät 1 den Zündimpuls, indem sie zum Beispiel eine höhere Spannung von zum Beispiel 30 V abgibt und/oder die Strombegrenzung zum Beispiel auf 4,5 A erhöht und/oder die Impulsdauer auf beispielsweise 4 ms verlängert. Durch diese Impulssteuerung läßt sich eine Zeitverzögerung zwischen den Zündzeitpunkten der Zündpillen 6 und 7 erzielen, so daß das Aufblasverhalten des Airbags noch besser an das Unfallgeschehen angepaßt werden kann. Sollen jedoch bei einem starken Unfall beide Zündpillen 6 und 7 gleichzeitig gezündet werden, wird sofort der stärkere Zündimpuls ausgegeben, so daß die Zündenergiegrenze bei beiden Zündpillen 6 und 7 rasch und im wesentlichen gleichzeitig erreicht wird.

Bei dem in Fig. 1 gezeigten Ausführungsbeispiel kann die weiterhin vorgesehene Zündpille 8 gleichen Zündenergiebedarf wie die Zündpillen 6 oder 7 aufweisen oder sich auch hiervon unterscheiden. Die Zündpille 8 ist mit einer zusätzlichen Schaltung 9, 10 versehen, die zur anfänglichen Ableitung des Zündstroms dient und damit eine schaltungstechnische Verzögerung des Zündzeitpunkts gegenüber dem Zündzeitpunkt der Zündpille 6 oder 7 bereitstellt. Die Schaltung 9, 10 enthält einen mit der Zündpille 8 in Reihe geschalteten Widerstand 9 und eine parallel zu der Zündpille 8 geschaltete Kapazität 10. Zu Beginn eines Zündimpulses fließt der Zündstrom zunächst über den Widerstand 9 hauptsächlich als Ladestrom in die Kapazität 10, so daß die Zündpille 8 anfänglich von einem sehr schwachen, nur allmählich zunehmenden Strom durchflossen wird. Dieser Stromfluß reicht nicht aus, um die Zündpille 8 zeitgleich mit der Zündpille 6 oder 7 zu zünden. Erst wenn die Kapazität 10 weitgehend aufgeladen ist, fließt der Zündstrom hauptsächlich durch die Zündpille 8, so daß diese dann die notwendige Zündenergie erreicht und zündet. Durch die Schaltung 9, 10 läßt sich somit trotz ansonsten identischer Zündpillen eine gezielte Zeitverzögerung der Auslösung der Zündpille 8 erzielen. Bei dieser Ausgestaltung können somit identische Zündpillen verwendet werden, wobei eine der Zündpillen ohne zusätzliche Beschaltung und die weitere(n) Zündpille(n) mit einer oder mehreren (gleichen oder unterschiedlichen) Zeitverzögerungsschaltungen versehen sein kann/können.

Durch die erfindungsgemäße Schaltung ist es somit möglich, mehrere Zündpillen, das heißt mehrere bislang getrennte Stromkreise, zusammenzufassen, wobei vorzugsweise insbesondere räumlich im Kraftfahrzeug benachbarte Zündpillen kombiniert werden. Hierdurch ergeben sich erhebliche Einsparungen in der notwendigen Verkabelung dieser Zündpillen. Als Beispiel können Kopf- und Thorax-Airbags, mehrere Stufen von Airbags, Gurtstraffer (Belt Pretensioners) oder andere Zündpillen, die immer gleichzeitig bzw. rasch aufeinanderfolgend zu zünden sind, zusammengefaßt werden.

Bei einer solchen Parallelschaltung einer Mehrzahl von Zündpillen kann in manchen Fällen das Problem auftreten, daß eine bereits gezündete Zündpille einen Kurzschluß verursacht, indem sie entweder selbst kurzgeschlossen ist oder einen Kurzschluß nach Masse oder zur Versorgungsspannung (zum Beispiel zur Kraftfahrzeug-Bordbatteriespannung) hervorruft. Bei dem in Fig. 1 gezeigten Ausführungsbeispiel würde dies bedeuten, daß zum Beispiel die Zündpille 6 nach ihrer Zündung die Leitungen 4 und 5 kurzschließt oder die Leitung 4 mit Massepotential kurzschließt bzw. die Leitung 5 auf Versorgungsspannung legt. In einem solchen Fall würde der zur Zündung der weiteren Zündpillen 7, 8 erforderliche Zündstrom unter Umgehung dieser Zündpillen geleitet werden, so daß diese nicht mehr auslösen würden.

Dieses Problem kann dadurch behoben werden, daß solche Zündpillen verwendet werden, die nach ihrer Zündung zerstört sind und damit zuverlässig hochohmig sind, so daß der vom Steuergerät 1 erzeugte Zündstrom nicht oder nur in vernachlässigbarem Ausmaß durch die bereits gezündeten Zündpillen fließen kann.

In Fig. 2 ist ein Ausführungsbeispiel partiell dargestellt, das eine andere Lösung für das vorstehend genannte Kurzschlußproblem bereitstellt. Dieses Ausführungsbeispiel entspricht hinsichtlich der Komponenten 1 bis 5 dem in Fig. 1 gezeigten Ausführungsbeispiel, so daß diese Komponenten nicht dargestellt sind. Bei dem in Fig. 2 gezeigten Ausführungsbeispiel ist zwischen die Leitungen 4 und 5 eine Reihenschaltung aus einer Sicherung 11 und einer Zündpille 12 geschaltet. Parallel hierzu liegt eine Zündpille 13 zwischen den Leitungen 4 und 5. Die Zündpille 12 besitzt geringeren Zündenergiebedarf als die Zündpille 13 und wird somit durch einen Impuls geringerer Spannung und/oder geringerer Stromstärke und/oder kürzerer Stromflußdauer als die Zündpille 13 gezündet.

Die Sicherung 11 ist so ausgelegt, daß sie durch einen zur Zündung der Zündpille 12 angelegten Zündimpuls nicht aktiviert wird, so daß der zur Zündung der Zündpille 12 fließende Zündstrom nahezu verlustfrei durch die Sicherung 11 fließen kann. Wenn jedoch die Zündpille 12 nach ihrer Zündung kurzgeschlossen sein sollte oder einen Kurzschluß hervorrufen sollte, fließt durch die Sicherung 11 im Anschluß hieran, oder bei einem nachfolgend angelegten Zündimpuls, ein sehr hoher Strom (Kurzschlußstrom), so daß die Sicherung 11 anspricht und zerstört wird, das heißt eine vollständige Stromunterbrechung hervorruft. Damit fließt die vom Steuergerät 1 zur Zündung der Zündpille 13 erzeugte Zündenergie ausschließlich in die Zündpille 13, so daß diese planmäßig gezündet wird.

Selbstverständlich können bei dem in Fig. 2 gezeigten Ausführungsbeispiel auch weitere Reihenschaltungen aus einer Sicherung und einer Zündpille vorgesehen sein, und es kann auch mit der Zündpille 13 eine Sicherung in Reihe geschaltet sein. Hierbei sind die Sicherungen so ausgelegt, daß sie durch die zum Zünden der zugeordneten Zündpille zugeführte Zündenergie nicht ausgelöst werden, jedoch bei einem zu starken Stromfluß, zum Beispiel einem Kurzschluß der zugehörigen Zündpille, aktiviert werden und damit eine dauerhafte Leitungsunterbrechung gewährleisten.

In Fig. 3 ist ein weiteres Ausführungsbeispiel ausschnittsweise dargestellt, bei dem das Steuergerät 1' zur Erzeugung von Zündimpulsen in Abhängigkeit von den über die Leitungen 2 zugeführten Sensorsignalen ausgelegt ist, wobei die Zündimpulse nicht nur unterschiedlich großen Energieinhalt, sondern auch unterschiedliche Polarität aufweisen können. Wie in Fig. 3 schematisch gezeigt ist, ist zusätzlich zu dem mit der Leitung 4 verbundenen Schalter (Schalttransistor) 3 mit Strombegrenzung ein Schalter 14 (vorzugsweise ebenfalls Schalttransistor mit Strombegrenzung) vorgesehen, wobei das Steuergerät 1' die Schalter 3 und 14 in Abhängigkeit von den jeweiligen Crashsensorsignalen so schaltet und ansteuert, daß die gewünschte Zündenergie (variable Impulsspannung und/oder variable Impulsstromstärke und/oder variable Impulsdauer) mit der entsprechenden Polarität (entweder Potential der Leitung 4 höher als das der Leitung 5, oder umgekehrt) erzeugt wird.

Zwischen den Leitungen 4 und 5 sind jeweils Reihenschaltungen aus Zündpillen 15, 16, 17 bzw. 18 und Gleichrichtern (zum Beispiel Dioden) 20, 21, 22 bzw. 23 parallel zueinander geschaltet. Ferner ist eine Zündpille 19 vorhanden, die direkt, ohne Gleichrichter, zwischen die Leitungen 4 und 5 geschaltet ist. Wie aus Fig. 3 ersichtlich ist, sind die Gleichrichter 20 und 21 so geschaltet, daß sie einen Stromfluß von der Leitung 4 zu der Leitung 5 ermöglichen, einen entgegengesetzten Stromfluß aber sperren. Demgegenüber sind die Gleichrichter 22 und 23 so eingefügt, daß sie einen Stromfluß von der Leitung 5 zu der Leitung 4, nicht aber in Gegenrichtung, erlauben. Die Zündpillen 15 und 16 sind jeweils auf unterschiedlichen Zündenergiebedarf eingestellt, das heißt benötigen unterschiedliche Zündimpulsenergie zur Zündung. Gleiches gilt für die Zündpillen 17 und 18. Bei dem gezeigten Ausführungsbeispiel ist die Zündpille 19 nicht mit einem Gleichrichter versehen, so daß durch die Zündpille 19 Strom bei einem Zündimpuls unabhängig von dessen Polarität fließen kann. Die Zündpille 19 ist vorzugsweise auf geringsten Zündenergiebedarf eingestellt und wird somit bereits gezündet, bevor eine der anderen Zündpillen 15 bis 18 zündet. Die Zündpille 19 ist hierbei einer Sicherheitseinrichtung zugeordnet, die bei einem Unfall unabhängig von dessen Schwere auf jeden Fall ausgelöst werden muß.

Diese Ausgestaltung bringt den Vorteil, daß das Steuergerät 1' über die Auswahl der Polarität des Zündimpulses zugleich auch festlegen kann, welche Zündpillen (15, 16 oder 17, 18) nachfolgend für eine eventuelle anschließende Zündung selektiert werden sollen. Jedoch ist es auch möglich, die Zündpille 19 mit einem eigenen Gleichrichter zu versehen, so daß diese nur bei Anlegen eines Zündimpulses korrekter Polarität gezündet wird.

Wenn das Steuergerät 1' in Abhängigkeit von der Schwere des Unfalls entscheidet, daß lediglich die Zündpille 15, nicht aber die Zündpillen 16 bis 18 aktiviert werden soll, erzeugt sie einen Zündimpuls mit positiver Polarität auf der Leitung 4 und einem solchen Energieinhalt, daß die auf niedrigeren Zündenergiebedarf ausgelegte Zündpille 15 zündet, die Zündpille 16 aber noch nicht anspricht. Die Zündpillen 17 und 18 bleiben hierbei stromfrei, da der Stromfluß durch die Gleichrichter 22 und 23 gesperrt wird. Wenn auch die Zündpille 16 zu zünden ist, erzeugt das Steuergerät 1' einen Zündimpuls entsprechend höheren Energieinhalts, der zum Auslösen der Zündpille 16 ausreicht. Auch hierbei bleiben die Zündpillen 17 und 18 inaktiv. Wenn alternativ oder zusätzlich die Zündpillen 17 und/oder 18 gezündet werden sollen, erzeugt das Steuergerät 1' den Zündimpuls derart, daß die Leitung 5 positive Polarität besitzt, so daß die Gleichrichter 22 und 23 leitend werden.

Das Steuergerät 1, 1' kann auch derart ausgelegt sein, daß es dann, wenn die Crashsensorsignale anfänglich einen starken Unfall signalisieren und ein entsprechend hoher Zündimpuls auf den Leitungen 4 und 5 zur Aktivierung einer Mehrzahl von Zündpillen erzeugt wird, diesen Zündimpuls vorzeitig wieder beendet, wenn die Crashsensorsignale nach Beginn des Unfalls signalisieren, daß das Unfallgeschehen doch nicht so schwerwiegend ist. Aufgrund des unterschiedlichen Zündenergiebedarfs der Zündpillen kann durch die vorzeitige Beendigung des Zündimpulses erreicht werden, daß Zündpillen höheren Zündenergiebedarfs, deren Zündung eigentlich beabsichtigt war, aber noch nicht erfolgt ist, ungezündet bleiben.

Anstelle einer Parallelschaltung ist es auch möglich, alle oder zumindest einige Zündpillen miteinander in Reihe zu schalten. Hierbei werden zumindest hinsichtlich der zuerst zündenden Zündpillen solche Zündpillen verwendet, die nach ihrer Zündung zuverlässig kurzgeschlossen sind.

In Fig. 4 ist ein Ausführungsbeispiel für eine solche Serienschaltung von Zündpillen 24, 25 gezeigt, die zwischen die Leitungen 4 und 5 eingefügt ist. Das nicht gezeigte Steuergerät 1 kann den in Fig. 1 dargestellten Aufbau besitzen. Wenn die Zündpille 24 kleineren Zündenergiebedarf als die Zündpille aufweist, ist die in Fig. 4 gezeigte, zusätzliche Beschaltung 26, 27 nicht notwendig. In diesem Fall erzeugt das Steuergerät 1 bei einem leichteren Unfall einen Zündimpuls auf den Leitungen 4, 5, der durch die Zündpillen 24 und 25 fließt, jedoch nur einen solchen Energieinhalt besitzt, daß nur die Zündpille 24 gezündet wird. Sofern aufgrund der Schwere des Unfalls auch noch eine Zündung der Zündpille 25 erforderlich sein sollte, wird der Zündimpuls entsprechend verlängert oder bereits ab Beginn ein entsprechend stärkerer Zündimpuls erzeugt.

Die in Fig 4 gezeigte zusätzliche Beschaltung 26, 27 stellt eine parallel zur Zündspule 25 geschaltete Umgehungsschaltung zur anfänglichen Ableitung des Zündstroms durch die Zündpille 25 dar, so daß diese zeitverzögert von dem Zündstrom 25 durchflossen wird und somit später als die Zündpille 24 zündet. Diese Ausgestaltung bringt den Vorteil, daß auch identische Zündpillen 24, 25, verwendet werden können und dennoch sichergestellt wird, daß zuerst immer die Zündpille 24 und dann erst die Zündpille 25 zündet. Die Umgehungsschaltung 26, 27 ist zum Beispiel eine zur Zündpille 25 parallel geschaltete Reihenschaltung aus einer Kapazität 26 und einem Widerstand 27. Bei Anlegen eines Zündimpulses fließt der durch die Zündpille 24 fließende Zündstrom somit zunächst anfänglich als Ladestrom der Kapazität 26 in die Umgehungsschaltung 26, 27. Der Stromfluß in der Zündpille 25 ist daher während der Anfangsphase sehr gering. Erst wenn die Kapazität 26 allmählich auf höheres Potential aufgeladen ist, beginnt auch-der Zündstrom zunehmend stärker durch die Zündpille zu fließen und ruft deren Zündung dann hervor, wenn die notwendige Zündenergie eingespeist worden ist.

Bei dem erfindungsgemäßen System und Verfahren ist somit die an die Zündpillen anzulegende Energie veränderbar, und zwar durch Änderung der Spannung, der Stromstärke und/oder der Zeitdauer, so daß die zu zündenden Zündpillen über diese Parameter selektierbar sind. Vorzugsweise werden hierbei Zündpillen eingesetzt, deren Zündenergieabstand ausreichend groß ist (entweder durch entsprechende Auslegung der Zündpillen oder durch entsprechende Beschaltung), so daß durch einen jeweiligen Zündimpuls sicher selektierbar ist, welche Zündpillen tatsächlich gezündet werden. Die Zündelektronik muß bei der Erfindung somit erheblich weniger Zündkreise (nur ein Zündkreis oder einige wenige Zündkreise mit entsprechenden Steuergeräten) zur Verfügung haben, so daß die Anzahl von notwendigen Anschlüssen und Leitungen sowie die andernfalls erforderliche Flexibilität hinsichtlich der Zündkreisauswahl verringert werden kann. Somit kann das Ausmaß an Verkabelung und von notwendigen Steckeranschlüssen usw. deutlich verringert werden, so daß auch der insgesamt benötigte Raumbedarf (Gehäusegröße, Steckergröße) gering gehalten bleiben kann.

## Patentansprüche

1. Insassenschutzsystem für ein Kraftfahrzeug, mit mindestens einem Zündkreis (1 bis 10; 11 bis 13; 1', 2 bis 5, 15 bis 23; 24 bis 27), der ein Steuergerät (1; 1') und mindestens zwei, über zwei gemeinsame parallele Leitungen (4, 5) mit dem Steuergerät (1; 1') verbundene Zündpillen (5 bis 8; 12, 13; 15 bis 19; 24, 25) zur Auslösung einer oder mehrerer Insassenschutzsystem-Schutzeinrichtungen, insbesondere Airbags, aufweist, wobei die Zündpillen (6 bis 8; 12, 13; 15 bis 19; 24, 25) so ausgelegt und/oder beschaltet sind, daß sie unterschiedlich hohen Zündenergiebedarf zur Zündung aufweisen, und wobei das Steuergerät (1, 1') zum Erzeugen von Zündimpulsen unterschiedlichen Energieinhalts ausgelegt ist und zur Zündung der Zündpillen oder zur selektiven Zündung einzelner Zündpillen den Energieinhalt des oder der Zündimpulse festlest.

2. Insassenschutzsystem nach Anspruch 1, **dadurch gekennzeichnet, daß** das Steuergerät (1, 1') zur Änderung des Energieinhalts der Zündimpulse die Impulsspannung variiert.

3. Insassenschutzsystem nach Anspruch 1 oder 2, **dadurch gekennzeichnet, daß** das Steuergerät (1, 1') zur Änderung des Energieinhalts der Zündimpulse die Stromstärke der Zündimpulse variiert.

4. Insassenschutzsystem nach Anspruch 3, **dadurch gekennzeichnet, daß** das Steuergerät (1, 1') einen Strombegrenzer zur Begrenzung des zu den Zündpillen fließenden Zündstroms aufweist und den Strombegrenzer zur Änderung des Zündstroms auf unterschiedliche Strombegrenzungswerte einstellt.

5. Insassenschutzsystem nach einem der vorangehenden Ansprüche, **dadurch gekennzeichnet, daß** das Steuergerät (1, 1') zur Änderung des Energieinhalts der Zündimpulse die Impulsdauer variiert.

6. Insassenschutzsystem nach einem der vorhergehenden Ansprüche, **dadurch gekennzeichnet, daß** mindestens zwei Zündpillen parallel an das Steuergerät (1; 1') angeschlossen sind.

7. Insassenschutzsystem nach einem der vorhergehenden Ansprüche, **dadurch gekennzeichnet, daß** die auf einen Zündimpuls niedrigeren Energieimpuls ansprechende/n Zündpille/n (12) mit einer Sicherung (11) in Reihe geschaltet ist/sind, die bei dem zur Zündung dieser Zündpille (12) anzulegenden Zündimpuls nicht anspricht, jedoch bei einem länger dauernden und/oder höheren Stromfluß zerstört wird.

8. Insassenschutzsystem nach einem der vorhergehenden Ansprüche, **dadurch gekennzeichnet; daß** parallel zu einer der Zündpillen (8; 25) eine Umgehungsschaltung (10; 26, 27) geschaltet ist, die den zu dieser Zündpille (8; 25) fließenden Strom anfänglich ableitet.

9. Insassenschutzsystem nach einem der vorhergehenden Ansprüche, **dadurch gekennzeichnet, daß** mindestens zwei Zündpillen (24, 25) in Reihe geschaltet sind, wobei die auf niedrigere Zündimpulsenergie ansprechende Zündpille (24) nach ihrer Zündung kurzgeschlossen ist.

10. Insassenschutzsystem nach einem der vorhergehenden Ansprüche, **dadurch gekennzeichnet, daß** mindestens einige, unterschiedlichen Zündenergiebedarf aufweisende Zündpillen (15 bis 18) mit unterschiedlich gepolten Gleichrichterelementen (20 bis 23) in Reihe geschaltet sind, und daß das Steuergerät (1') zur Erzeugung von Zündimpulsen unterschiedlicher Polarität ausgelegt ist und zur Zündung der Zündpillen die Polarität des oder der Zündimpulse festlegt.

11. Verfahren zum Ansteuern eines Zündkreises eines Insassenschutzsystems eines Kraftfahrzeugs, der mehrere Zündpillen (5 bis 8; 12, 13; 15 bis 19; 24, 25) und mindestens ein Steuergerät (1; 1') aufweist, **dadurch gekennzeichnet, daß** vom Steuergerät zur Zündung der Zündpillen oder zur selektiven Zündung einzelner, auf unterschiedlichen Zündenergiebedarf ausgelegter und/oder beschalteter Zündpillen Zündimpulse unterschiedlichen Energieinhalts erzeugt werden.

12. Verfahren nach Anspruch 11, **dadurch gekennzeichnet, daß** das Steuergerät (1, 1') Zündimpulse unterschiedlicher Polarität erzeugt.

## Claims

1. Vehicle occupant protection system for a motor vehicle, having at least one firing circuit (1 to 10; 11 to 13; 1', 2 to 5, 15 to 23; 24 to 27) which has a control unit (1; 1') and at least two firing caps (5 to 8; 12, 13; 15 to 19; 24, 25), connected to the control unit (1; 1') by means of two common parallel lines (4, 5), for triggering one or more vehicle occupant protection system protective devices, in particular airbags, the firing caps (6 to 8; 12, 13; 15 to 19; 24, 25) being configured and/or wired in such a way that they have different firing energy requirements for firing, and the control unit (1, 1') for generating firing pulses is configured with different energy content and the energy content of the firing pulse or pulses is specified in order to fire the firing caps or for selectively firing individual firing caps.

2. Vehicle occupant protection system according to Claim 1, **characterized in that** the control unit (1, 1') varies the pulse voltage in order to change the energy content of the firing pulses.

3. Vehicle occupant protection system according to Claim 1 or 2, **characterized in that** the control unit (1, 1') varies the current strength of the firing pulses in order to change the energy content of the firing pulses.

4. Vehicle occupant protection system according to Claim 3, **characterized in that** the control unit (1, 1') has a current limiter for limiting the firing current flowing to the firing caps, and sets the current limiter to different current limiting values in order to change the firing current.

5. Vehicle occupant protection system according to one of the preceding claims, **characterized in that** the control unit (1, 1') varies the pulse length in order to change the energy content of the firing pulses.

6. Vehicle occupant protection system according to one of the preceding claims, **characterized in that** at least two firing caps are connected in parallel to the control unit (1; 1').

7. Vehicle occupant protection system according to one of the preceding claims, **characterized in that** the firing cap (12) or caps (12) responding to a firing pulse with a low energy pulse is/are connected in series with a fuse (11) which does/do not respond when the firing pulse which is to be applied in order to fire this firing cap (12) is present, but rather is destroyed when there is a relatively long lasting and/or relatively strong flow of current.

8. Vehicle occupant protection system according to one of the preceding claims, **characterized in that** a bypass circuit (12; 26, 27) which initially diverts the current from flowing to this firing cap (8; 25) is switched in parallel with one of the firing caps (8; 25).

9. Vehicle occupant protection system according to one of the preceding claims, **characterized in that** at least two firing caps (24, 25) are connected in series, the firing cap (24) which responds to relatively low firing pulse energy being short-circuited after its firing.

10. Vehicle occupant protection system according to one of the preceding claims, **characterized in that** at least a number of firing caps (15 to 18) which have a different firing energy requirement are connected in series with rectifier elements (20 to 23) which have different polarities, and **in that** the control unit (1') is configured so as to generate firing pulses with different polarities and specifies the polarity of the firing pulse or pulses in order to fire the firing caps.

11. Method for actuating a firing circuit of a vehicle occupant protection system of a motor vehicle which has a plurality of firing caps (5 to 8; 12, 13; 15 to 19; 24, 25) and at least one control unit (1; 1'), **characterized in that**, in order to fire the firing caps or to selectively fire individual firing caps which are configured and/or wired for different firing energy requirements, the control unit generates firing pulses with different energy content.

12. Method according to Claim 11, **characterized in that** the control unit (1, 1') generates firing pulses with different polarity.

## Revendications

1. Système de protection de passagers pour un véhicule automobile, comportant au moins un circuit d'allumage (1 à 10 ; 11 à 13 ; 1', 2 à 5, 15 à 23 ; 24 à 27) qui contient un appareil de commande (1 ; 1') et au moins deux amorces (5 à 8 ; 12, 13 ; 15 à 19 ; 24, 25) reliées par l'intermédiaire de lignes communes parallèles (4, 5) à un appareil de commande (1 ; 1') pour le déclenchement d'un ou de plusieurs dispositifs de protection de système de protection de passagers, notamment de coussins gonflables, dans lequel les amorces (6 à 8 ; 12, 13 ; 15 à 19 ; 24, 25) sont conçues et/ou branchées de telle sorte qu'elles ont des besoins en énergie d'allumage de grandeurs différentes pour l'allumage, et dans lequel l'appareil de commande (1, 1') est conçu pour la production d'impulsions d'allumage de contenus énergétiques différents et fixe pour l'allumage des amorces ou pour l'allumage sélectif d'amorces individuelles le contenu énergétique de l'impulsion d'allumage ou des impulsions d'allumage.

2. Système de protection de passagers selon la revendication 1, **caractérisé par le fait que** l'appareil de commande (1, 1') modifie la tension d'impulsion pour modifier le contenu énergétique des impulsions d'allumage.

3. Système de protection de passagers selon la revendication 1 ou 2, **caractérisé par le fait que** l'appareil de commande (1, 1') modifie l'intensité de courant des impulsions d'allumage pour modifier le contenu énergétique des impulsions d'allumage.

4. Système de protection de passagers selon la revendication 3, **caractérisé par le fait que** l'appareil de commande (1, 1') comporte un limiteur de courant pour la limitation du courant d'allumage passant vers les amorces et que, pour modifier le courant d'allumage, il règle le limiteur de courant à des valeurs de limitation de courant différentes.

5. Système de protection de passagers selon l'une des revendications précédentes, **caractérisé par le fait que** l'appareil de commande (1, 1') modifie la durée d'impulsion pour modifier le contenu énergétique des impulsions d'allumage.

6. Système de protection de passagers selon l'une des revendications précédentes, **caractérisé par le fait qu'**au moins deux amorces sont raccordées en parallèle à l'appareil de commande (1 ; 1').

7. Système de protection de passagers selon l'une des revendications précédentes, **caractérisé par le fait que** la ou les amorces (12) réagissant à une impulsion d'allumage ayant une impulsion d'énergie inférieure sont branchées en série avec un fusible (11) qui ne réagit pas lors de l'impulsion d'allumage à appliquer pour l'allumage de cette amorce (12) mais qui est détruit lors d'un flux de courant qui dure plus longtemps et/ou qui est plus grand.

8. Système de protection de passagers selon l'une des revendications précédentes, **caractérisé par le fait qu'**un montage de déviation (10 ; 26, 27) est branché en parallèle avec l'une des amorces (8 ; 25) et dévie au début le courant passant vers cette amorce (8 ; 25).

9. Système de protection de passagers selon l'une des revendications précédentes, **caractérisé par le fait qu'**au moins deux amorces (24, 25) sont branchées en série, l'amorce (24) réagissant à une énergie d'impulsion d'allumage plus petite étant court-circuitée après son allumage.

10. Système de protection de passagers selon l'une des revendications précédentes, **caractérisé par le fait qu'**au moins quelques amorces (15 à 18) ayant des besoins en énergie d'allumage différents sont branchées en série avec des éléments redresseurs (20 à 23) polarisés différemment et que l'appareil de commande (1') est conçu pour la production d'impulsions d'allumage de polarités différentes et fixe la polarité de la ou des impulsions d'allumage pour l'allumage des amorces.

11. Procédé pour la commande d'un circuit d'allumage d'un système de protection de passagers d'un véhicule automobile, qui comporte plusieurs amorces (5 à 8 ; 12, 13 ; 15 à 19 ; 24, 25) et au moins un appareil de commande (1 ; 1'), **caractérisé par le fait qu'**on produit au moyen de l'appareil de commande, pour l'allumage des amorces ou pour l'allumage sélectif d'amorces individuelles conçues et/ou branchées sur différents besoins en énergie d'allumage, des impulsions d'allumage ayant des contenus énergétiques différents.

12. Procédé selon la revendication 11, **caractérisé par le fait que** l'appareil de commande (1, 1') produit des impulsions d'allumage de polarités différentes.
